Europäisches Patentamt

European Patent Office

Office européen des brevets

(19)

(11) Numéro de publication : **0 072 723 B1**

# FASCICULE DE BREVET EUROPÉEN

(12)

(45) Date de publication du fascicule du brevet :
**27.05.87**

(51) Int. Cl.⁴ : **G 11 B  7/08**

(21) Numéro de dépôt : **82401396.5**

(22) Date de dépôt : **27.07.82**

(54) **Dispositif optique de suivi de piste à échantillonnage.**

(30) Priorité : **14.08.81 FR 8115765**

(43) Date de publication de la demande :
**23.02.83 Bulletin 83/08**

(45) Mention de la délivrance du brevet :
**27.05.87 Bulletin 87/22**

(84) Etats contractants désignés :
**DE GB IT NL SE**

(56) Documents cités :
**EP-A- 0 011 990**
**EP-A- 0 023 868**
**EP-A- 0 035 236**
**DE-A- 3 020 855**
**FR-A- 2 312 087**
**FR-A- 2 312 091**
**US-A- 3 919 697**
**Elektronik 1978, no. 15, p. 31-34**

(73) Titulaire : **THOMSON-CSF**
**173, Boulevard Haussmann**
**F-75379 Paris Cedex 08 (FR)**

(72) Inventeur : **Bricot, Claude**
**THOMSON-CSF SCPI 173, bld Haussmann**
**F-75379 Paris Cedex 08 (FR)**
Inventeur : **Gerard, Jean-Louis**
**THOMSON-CSF SCPI 173, bld Haussmann**
**F-75379 Paris Cedex 08 (FR)**
Inventeur : **Audouin, Michel**
**THOMSON-CSF SCPI 173, bld Haussmann**
**F-75379 Paris Cedex 08 (FR)**

(74) Mandataire : **Weinmiller, Jürgen et al**
**Lennéstrasse 9 Postfach 24**
**D-8133 Feldafing (DE)**

Jouve, 18, rue St-Denis, 75001 Paris, France

## Description

La présente invention se rapporte aux dispositifs optiques de transcription de signaux mettant en œuvre un support d'information éclairé par une tache lumineuse servant à inscrire ou à lire des données numériques ou analogiques selon une piste prégravée. Il est connu du document Elektronik 1978 — 12, pages 31-34, de réaliser sur un disque optique une piste prégravée nécessaire au positionnement radial d'une tête d'écriture lecture. Cette piste se décompose en éléments adjacents qui sont à leur tour subdivisés en secteurs. L'écriture par ablation des données modifie les caractéristiques optiques de la piste prégravée.

Le support en forme de disque sur lequel l'information doit être inscrite a été prégravé, par exemple en creux, selon un ensemble d'éléments de pistes agencés selon des cercles concentriques ou organisés selon les spires en spirale. La largeur des éléments de piste est choisie légèrement inférieure au diamètre de la tache lumineuse et ces éléments sont séparés par des plages interpistes dont la largeur est légèrement supérieure à ce diamètre. La surface en relief du support reçoit une couche mince appropriée à l'inscription par voie thermooptique. Cette disposition d'éléments permet d'explorer la piste avant inscription, car l'interaction de la tache de lecture avec la piste fournit un rayonnement dispersé d'intensité réduite, alors que les plages interpistes ne sont pas génératrices de dispersion.

Tout se passe du point de vue détection, comme si les pistes étaient plus sombres que les interpistes. Tout écart de suivi de piste peut donc être facilement détecté grâce à ce contraste d'amplitude. Lorsque la couche recouvrant le support est soumise au rayonnement inscripteur, les zones inscrites sont éclaircies, ce qui contribue à créer un bon contraste le long de la piste. Cependant ces zones éclaircies tendent à se confondre avec la densité plus faible des interpistes avoisinants, ce qui fait perdre radialement le contraste nécessaire pour assurer un bon suivi de piste.

On voit donc que l'inscription nuit au bon repérage radial des pistes dans toutes les zones où la couche a emmagasiné des données. Par contre le contraste piste-interpiste reste bon dans les zones dépourvues d'inscriptions.

Le dispositif évoqué ci-dessus nécessite donc le suivi d'une piste portée par le support d'information, l'invention concerne plus particulièrement les moyens de suivi de ladite piste. Ces moyens servent à assurer l'exploration de la piste par la tache lumineuse, et à cet effet ils comprennent une détection optique des écarts de suivi de piste et un organe de déplacement de la tache de lecture actionné en vue de compenser les écarts.

Un dispositif optique de transcription comprend habituellement une source de rayonnement, un moyen modulateur optique à commande électrique et des moyens pour permettre le suivi de la piste à lire ou enregistrer. La source de rayonnement fournit un faisceau d'intensité suffisante pour permettre l'enregistrement sur le support d'information. Le faisceau à la sortie du moyen modulateur optique est modulé en conformité avec les signaux à transcrire présents à l'entrée du moyen modulateur. Les moyens de suivi de piste comportent au moins un moyen de détection dans lequel le rayonnement donne naissance à un signal qui agit sur des moyens déflecteurs de faisceau pour assurer le suivi de piste.

L'exploration de la piste vierge prégravée ne soulève pas de difficultés, mais il en va autrement au cours de l'inscription et lors d'une lecture effectuée après que les données aient été inscrites.

En effet, lorsque l'on enregistre des données, l'intensité de l'éclairement du support change de valeur de sorte que le rayonnement réfléchi ou transmis par le support d'information subit une modulation d'intensité qui n'existe pas en mode de lecture. L'écriture se fait généralement avec des intensités de faisceau notablement plus élevées que celles requises pour la lecture, ce qui entraîne une variation intempestive du gain de la boucle de contre-réaction qui gère le suivi de la piste. De plus, au cours de ces brusques changements de niveau d'intensité, il se crée des phénomènes transitoires qui conduisent à des instabilités préjudiciables au bon fonctionnement de la boucle de contre-réaction. Il est connu du document EP-A-0035 236 (à considérer suivant l'article 54(3)) de bloquer le signal photodétecté lorsque l'intensité du faisceau atteint le niveau d'écriture. Des moyens échantillonneurs bloqueurs conservent une valeur acquise du signal photodétecté juste avant l'augmentation d'intensité et ce, jusqu'à ce que cette augmentation ait cessé.

Lorsqu'on lit des pistes enregistrées, on détecte un chapelet de zones éclaircies entrecoupées de zones restées plus sombres, mais radialement le contraste piste-interpiste devient irrégulier puisque seules les zones de la piste non enregistrées ont conservé leur contraste initial par rapport aux interpistes.

La présente invention vise à pallier ces inconvénients en adoptant une technique d'échantillonnage rendant le suivi de piste insensible à la modulation d'un faisceau d'écriture.

Dans le document US-A-3 919 697 est décrit un dispositif de suivi automatique de piste pour dispositif de lecture et d'écriture optique de données comportant un support d'information, une source de rayonnement optique associée à un objectif pour former dans la surface de référence dudit support au moins une tache destinée à l'exploration d'un élément de piste appartenant à un ensemble d'éléments de piste adjacents : ledit dispositif de suivi comprenant des moyens d'asservissement assurant le suivi dudit élément de piste par ladite tache, des moyens photodétecteurs recueillant un rayonnement émergeant de la portion de ladite surface de référence éclairée par ladite tache et des moyens échantillonneurs reliant lesdits moyens photodétecteurs auxdits moyens d'asservissement pour effectuer des prélèvements de signal photodétecté au cours d'intervalles de temps correspondant à l'exploration de sites dédiés au suivi de piste qui alternent le long dudit élément de piste avec des sites dédiés au stockage desdites données. L'objet de la présente invention est défini dans la revendication 1.

L'invention sera mieux comprise au moyen de la description qui suit des figures annexées parmi lesquelles :

La figure 1 représente un dispositif d'inscription de données avec exploration asservie d'une piste.

La figure 2 représente un dispositif d'inscription.

Les figures 3 et 4 sont des diagrammes explicatifs.

La figure 5 représente une première variante de dispositif conforme à l'invention.

La figure 6 représente une seconde variante de dispositif conforme à l'invention.

La figure 7 montre un ensemble de diagrammes explicatifs.

La figure 8 représente une troisième variante de dispositif conforme à l'invention.

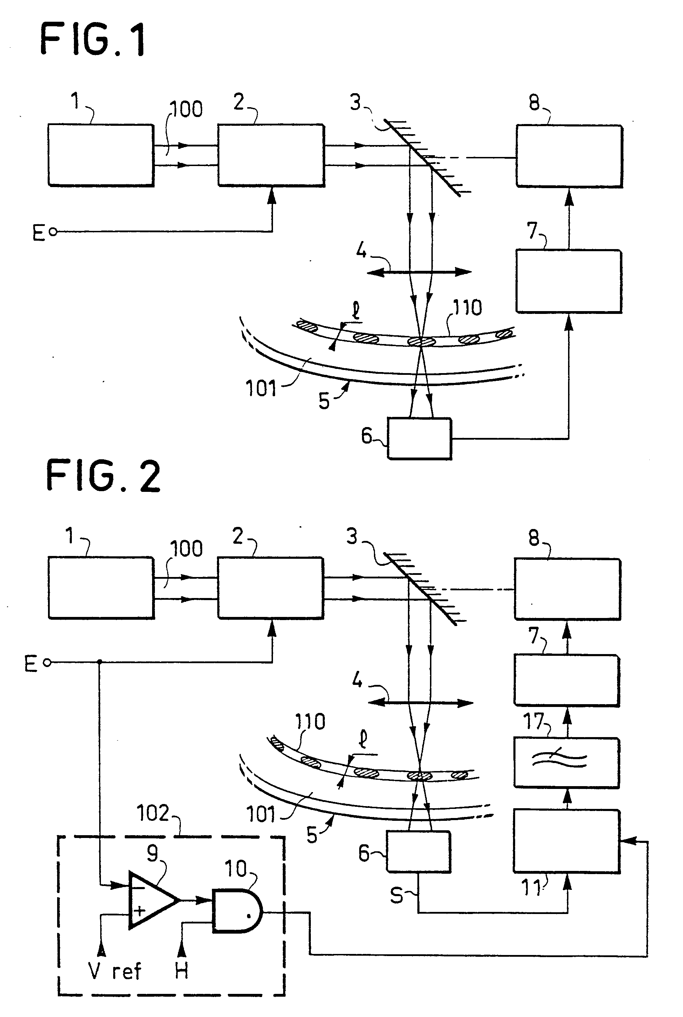

Sur la figure 1, on peut voir un dispositif d'inscription optique avec exploration asservie en ce qui concerne le suivi de piste. Le faisceau 100 issu d'une source de rayonnement 1 traverse un modulateur 2 pour en ressortir modulé en conformité avec le signal à transcrire présent sur la borne d'entrée E. Le faisceau est défléchi par des moyens déflecteurs 3, tel que par exemple un miroir pivotant, il est ensuite focalisé sur une piste du support d'information 5 par un objectif 4. La surface de référence 101 contenant la piste est donc éclairée par une tache lumineuse qui par exemple s'étend sur la largeur « 1 » de la piste. Après transmission ou réflexion, le rayonnement qui a interagit avec la piste est reçu par un moyen photodétecteur 6 duquel est issu un signal indicateur de l'écart de suivi de piste par la tache lumineuse. Ce signal est traité par le circuit d'asservissement 7 : un moteur 8 relié à la sortie du circuit d'asservissement 7 permet de modifier l'orientation des moyens déflecteurs 3 de façon à assurer le suivi de la piste.

A l'origine, le support d'information 101 comporte une prégravure destinée à matérialiser des éléments de piste vierge 110 disposés en spires concentriques. Pour inscrire l'information, la tache lumineuse projetée par l'objectif 4 doit suivre un élément de piste et y former par voie thermo-optique un chapelet d'altérations permanentes. La disposition de ces altérations le long de l'élément de piste caractérise géométriquement le signal modulateur à deux niveaux qui commande le modulateur 2. La tache lumineuse qui a servi à inscrire l'information peut servir ensuite à la détection des altérations dans une phase de lecture où il faut encore assurer le suivi de la piste. La boucle d'asservissement 7, 8 qui est chargée du suivi de piste est soumise à deux types de perturbations. Les unes sont observées au cours de la phase d'écriture, car l'intensité lumineuse de la tache varie au rythme des altérations à créer le long de la piste. Les autres sont observées au cours de la phase de lecture, car le contraste optique n'est pas le même selon que la tache explore une portion de piste altérée par l'écriture ou une portion de piste demeurée intacte. Le gain de la boucle d'asservissement peut donc varier en grandeur et en signe et ce défaut peut faire décrocher l'asservissement.

La figure 2 est une représentation d'un dispositif optique d'inscription. Le faisceau 100 issu de la source de rayonnement 1 traverse le modulateur 2, est défléchi par le moyen déflecteur 3 et se voit focalisé sur le support d'information 5 par l objectif 4. Le faisceau modulé, par exemple en transmission, par le support 5 donne naissance dans au moins un moyen photodétecteur 6 à un signal électrique S. Des moyens échantillonneurs 11 disposés à la sortie du photodétecteur 6 prélèvent des échantillons du signal S et les transmettent à l'entrée du circuit d'asservissement 7. Les moyens échantillonneurs 11 effectuent leurs prélèvements au cours d'intervalles de temps où l'intensité lumineuse de la tache exploratrice de la piste a une valeur de repos correspondant à un premier niveau d'éclairement du support d'information. De ce fait, entre ces intervalles de temps, le niveau d'éclairement peut changer sans que cela se répercute sur le fonctionnement de la boucle d'asservissement de suivi de piste. A titre d'exemple non limitatif, en ce qui concerne le circuit de la figure 2, le signal appliqué à l'entrée E peut prendre deux valeurs qui correspondent à la création d'une altération ou à la conservation de l'état vierge de la piste. Ce signal est disponible à l'entrée d'un circuit de commande 102 qui peut être constitué par un circuit comparateur à seuil 9 qui reçoit ce signal sur son entrée inverseuse et sur son autre entrée une tension de référence Vréf comprise entre les deux valeurs à différencier. La sortie du comparateur 9 est reliée à l'une des entrées d'une porte « ET » 10 qui reçoit sur son autre entrée un signal d'horloge H. Ce signal d'horloge fournit des impulsions destinées à commander le prélèvement d'échantillon dans le signal délivré par les moyens photodétecteurs 6. A cet effet, la porte « ET » 10 a sa sortie reliée à l'entrée de commande des moyens échantillonneurs 11. Tant que le signal électrique à l'entrée E reste inférieur à la tension Vréf, la sortie du comparateur 9 est à un niveau qui autorise le franchissement de la porte « ET » 10 par le signal d'horloge H nécessaire pour commander les prélèvements par les moyens échantillonneurs 11.

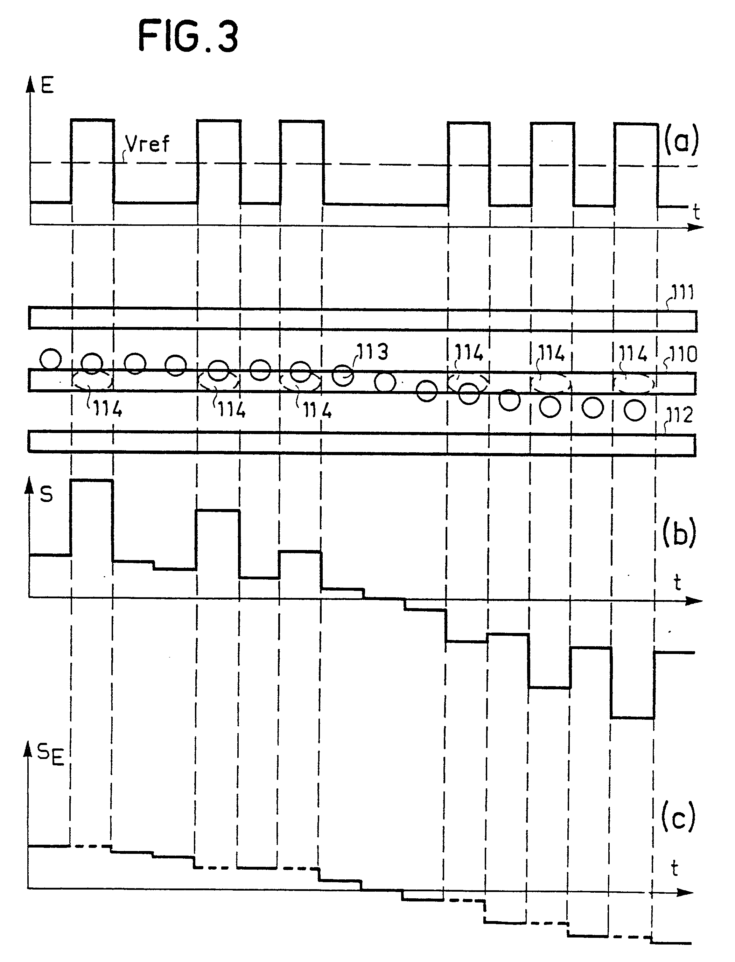

Les divers signaux en présence sont représentés sur la figure 3. On a supposé que le signal à la sortie des moyens photodétecteurs 6 renferme une composante destinée à mettre en évidence un écart de suivi de piste. Sur la figure 3 en « b » est représenté en fonction du temps, le signal S à la sortie des moyens photodétecteurs 6, simultanément sont représentés sur la figure 3 « a » un signal appliqué à l'entrée E où alternent des phases d'écriture correspondant au dépassement du seuil Vréf et des phases intercalaires où l'amplitude du signal E est en deçà du seuil. En dessous du diagramme (a) on a représenté trois portions de pistes adjacentes 110, 111 et 112 et les positions successives de la tache lumineuse 113 en exagérant les écarts de suivi. Les zones d'écriture sur l'élément de piste 110 sont symbolisées par des plages 114 qui correspondent aux durées pendant lesquelles le seuil Vréf est dépassé par le signal E. Le signal $S_E$ délivré par les moyens échantillonneurs 11 est une suite d'échantillons représentés en « C » sur la figure 3. On notera que la fréquence du signal d'horloge H est égale à la fréquence de découpage du signal E illustrée en « a », mais cette fréquence pourrait être plus élevée de façon à prélever davantage d'échantillons. Pour assurer une bonne reconstitution du signal d'écart de suivi de piste, il faut prélever au moins deux échantillons pour la plus haute fréquence contenue dans cette forme d'onde. La reconstitution du signal d'écart de suivi de piste peut se faire au moyen d'un filtre passe-bas 17 disposé entre les moyens échantillonneurs 11 et le circuit d'asservissement 7.

Sur la figure 3, on voit que le signal $S_E$ représenté en (c) est formé des plages en trait plein occupant les intervalles de temps où le signal E est inférieur au seuil Vréf. Ces plages sont en soi suffisantes pour fournir après lissage une reproduction satisfaisante de la position de la tache lumineuse 113 par rapport à l'élément de piste 110. La figure 3 montre qu'une reproduction continue peut être obtenue en faisant appel à des moyens d'échantillonnage-blocàge qui ont pour fonction de prélever l'échantillon et de conserver sa valeur en mémoire jusqu'au prélèvement suivant. Cet aspect est illustré sur la courbe représentative du signal $S_E$ par des plages en pointillé qui prolongent la plage pleine qui les précède.

Les diagrammes de la figure 3 se rapportent au cas d'un signal inscrit de type numérique. La tension Vréf est avantageusement comprise entre les deux niveaux de tension respectivement nécessaires pour transcrire l'un et l'autre état d'un mot numérique.

Au lieu d'utiliser toutes les plages non inscrites disponibles comme fenêtres d'échantillonnage, on peut adopter a priori sur le support d'information une disposition par blocs d'écriture alternant avec des plages vierges suffisamment rapprochées pour détecter correctement l'allure des écarts de suivi de piste.

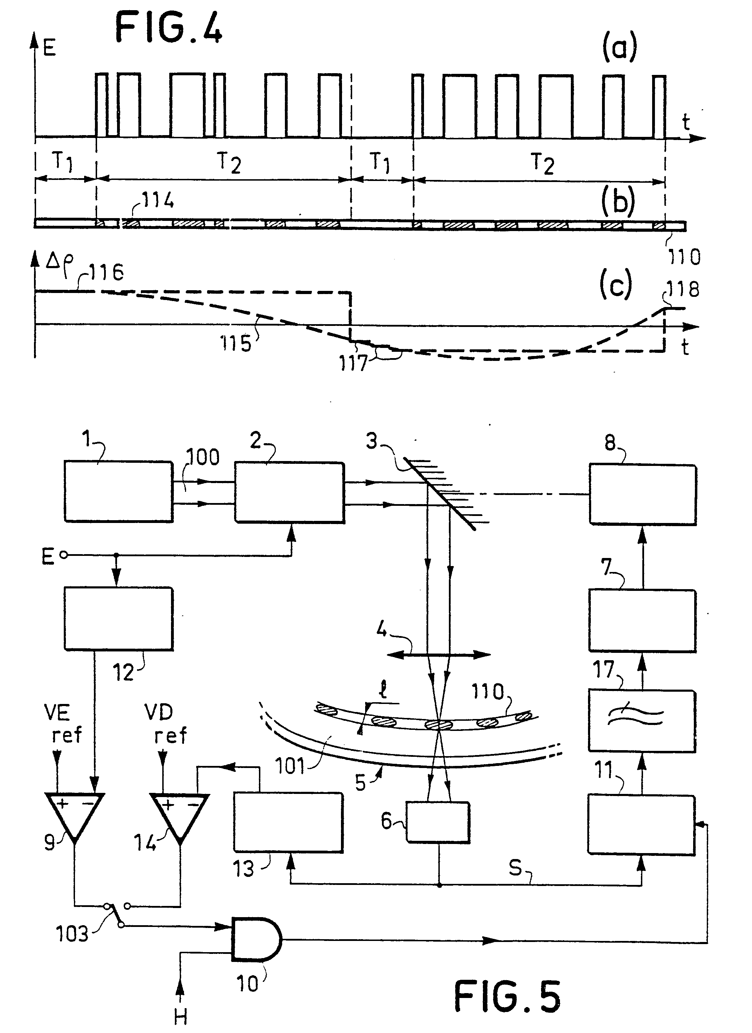

La figure 4 montre en (a) un agencement par bloc du signal E à enregistrer. Les phases d'écriture ont une durée $T_2$ et elles sont séparées par des plages de durée $T_1$ spécialement destinées à la détection des écarts de suivi de piste. L'élément de piste 110 représenté en (b) sur la figure 4 n'est inscriptible par les zones 114 que dans les plages correspondant aux durées $T_2$. Le diagramme représenté en (c) sur la figure 4 donne en fonction du temps l'écart de suivi $\Delta\rho$. La courbe 115 représente l'évolution de l'écart $\Delta\rho$. Les parties 116, 117 et 118 représentent les échantillonnages effectués pendant les phases non inscriptibles de durée $T_1$. Le repérage des plages $T_1$ se fait au moyen d'un drapeau ou par tout autre moyen approprié. Le tracé en escalier qui prolonge chaque échantillonnage représente une conservation en mémoire de l'échantillon. Dans certains cas de détection d'écart de suivi de piste, il peut être nécessaire de prévoir plusieurs échantillonnages entre deux phases successives d'écriture.

Jusqu'ici on a supposé que la boucle qui réalise le suivi de piste est perturbée par les changements d'intensité lumineuse nécessités par l'écriture de l'information le long d'une piste.

Une autre forme de perturbation peut être engendrée en phase de lecture à niveau d'éclairement constant, en effet, le long d'une piste préenregistrée, on peut former des zones ayant une interaction telle avec un faisceau de lecture que le signal de détection perde une partie du contraste de prégravure et aille jusqu'à l'inverser. Ceci ne peut que perturber le fonctionnement du dispositif de suivi de piste. Dans ce cas, l'invention prévoit de commander le prélèvement d'échantillon à partir du signal détecté. C'est pourquoi selon une première variante d'un dispositif selon l'invention représentée à la figure 5, le dispositif comporte deux circuits comparateurs à seuil 9 et 14. Le premier comparateur 9 permet, comme précédemment, une comparaison sur le signal d'entrée E tandis que le second comparateur 14 permet une comparaison sur le signal S disponible à la sortie des moyens photodétecteurs 6. Les signaux sortant des comparateurs 9 et 14 sont commutés par un commutateur 103 en fonction du mode de fonctionnement retenu. Le signal sélectionné par le commutateur 103 est appliqué à l'une des entrées de la porte « ET » 10 afin d'autoriser le passage du signal d'horloge H. Pour compenser les divers retards et permettre une mise en coïncidence des signaux à l'entrée de la porte « ET » 10, le signal d'entrée E traverse un circuit à retard 12, puis est comparé à une tension VE réf dans le comparateur à seuil 9, tandis que le signal fourni à la sortie des moyens photodétecteurs 6 traverse lui un circuit à retard 13, puis est comparé à une tension VD réf dans le comparateur 14. Le signal sortant des moyens échantillonneurs 11 est lissé et reconstitué après passage dans un filtre passe-bas 17. Une variante de l'invention, telle que décrite et représentée à la figure 5, une fois les tensions de références VE réf et VD réf, et les circuits à retard 12 et 13 judicieusement choisis, autorise un fonctionnement de la boucle de contre-réaction à l'abri de tout phénomène perturbateur dû aux brusques variations d'intensité lumineuse du faisceau d'éclairement ou aux fluctuations produites par certains passages de la piste lors de la lecture.

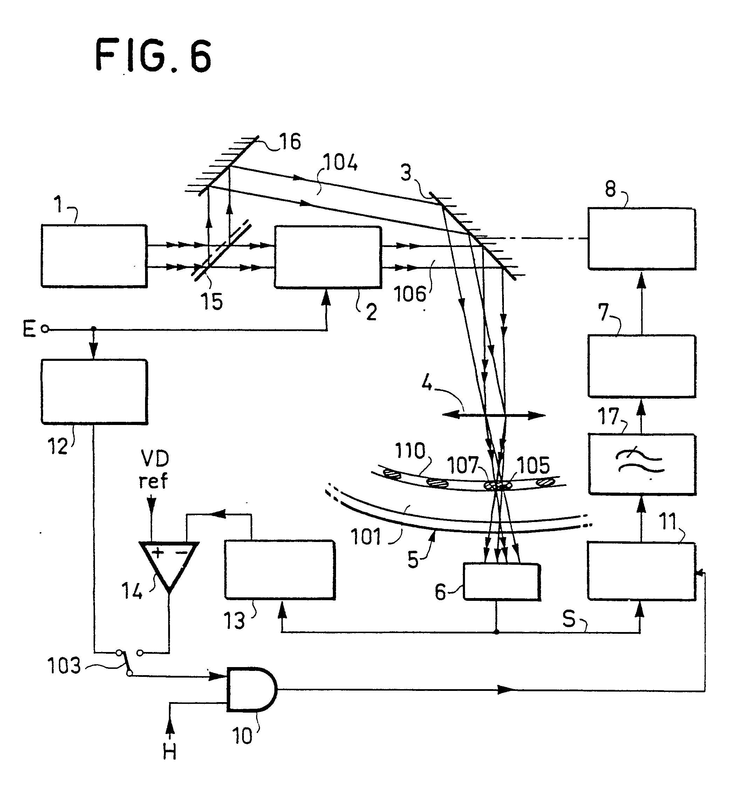

Un bon choix du code utilisé pour le codage des mots numériques permet de représenter ceux-ci avec deux états sans nécessité de recourir à des intervalles d'identification entre mots. Ainsi, on ne peut avoir à la sortie du modulateur 2 que deux intensités lumineuses. Il est alors avantageux d'adopter un dispositif tel que représenté à la figure 6, dispositif dans lequel le faisceau issu de la source de rayonnement 1 se trouve divisé en deux faisceaux, par exemple par une lame semi-transparente 15, un faisceau de faible intensité lumineuse 104 ou faisceau pilote et un faisceau de forte intensité lumineuse 106 ou faisceau de transcription. Les deux faisceaux sont focalisés par l'objectif 4 sur la surface de référence 101 de façon à éclairer le support 5 par deux taches se succédant selon la piste prégravée 110. Les rayons recueillis par les moyens photodétecteurs 6 en provenance des deux taches lumineuses peuvent aboutir à créer des perturbations sur le signal électrique délivré. Ces perturbations sont éliminées par l'échantillonnage. L'intensité du faisceau pilote 104 est par exemple de 25 % de l'intensité fournie par le faisceau issu de la source de rayonnement 1. Le faisceau pilote 104 après avoir été défléchi une première fois par la lame semi-transparente 15 est défléchi une seconde fois par un miroir auxiliaire 16. Après déflexion par le moyen déflecteur 3, il se trouve selon une direction légèrement oblique par rapport au faisceau d'inscription avant l'objectif 4. Le faisceau pilote 104 après focalisation par l'objectif 4 sur la surface de référence 101 donne une tache 105 présentant un faible niveau d'intensité et permettant le suivi de piste. Le faisceau de transcription 106 donne une tache lumineuse 107 plus intense. Le signal présent sur la borne d'entrée E peut présenter deux états à savoir un premier état pour commander au modulateur 2 de laisser passer le faisceau de transcription 106 et un deuxième état pour commander au modulateur 2 de couper ledit faisceau. Un modulateur 2 de ce type fonctionnant en tout ou rien est facile à fabriquer et facile de mise en œuvre. Le signal présent sur la borne d'entrée E étant numérique, il peut être appliqué directement à l'entrée de la porte « ET » 10, via le commutateur 103, sans avoir besoin d'un circuit comparateur de tension. Pour compenser les divers retards, il s'avère nécessaire d'insérer un circuit à retard 12 entre la borne d'entrée E et la porte « ET » 10.

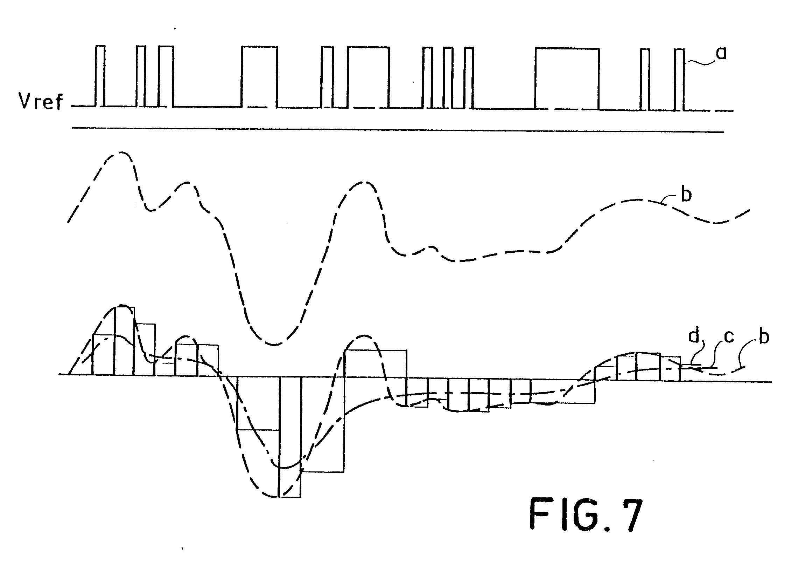

Jusqu'ici on a admis que le nombre d'échantillons prélevés était suffisant pour garantir une bonne reconstitution de la forme d'onde après lissage par le filtre passe-bas 17. De plus, ceci suppose que la durée de prélèvement et le temps séparant deux échantillons successifs soient sensiblement constants. Pour garantir un meilleur suivi à l'aide d'échantillons qui, compte tenu du signal sur la borne d'entrée E, présentent une périodicité variable, on peut prévoir un moyen de mémorisation qui coopère avec les moyens échantillonneurs 11 pour conserver la valeur d'un échantillon jusqu'à l'apparition de l'échantillon suivant. Le moyen de mémorisation et les moyens échantillonneurs sont avantageusement constitués par un échantillonneur-bloqueur dont le signal disponible à la sortie traverse le filtre passe-bas 17 avant d'être appliqué à la boucle de contre-réaction. Ainsi sur la figure 7, sont représentés ces divers signaux : signal à l'entrée E en (a), signal S fourni par les moyens photodétecteurs 6 en (b) et signal à la sortie de l'échantillonneur-bloqueur en (d). Le signal à la sortie de l'échantillonneur-bloqueur est plus fidèle que le signal représenté en (c) et qui correspond à un simple filtrage, comme on peut le voir à la figure 7. L'utilisation d'un échantillonneur bloqueur améliore notablement le rapport signal/bruit.

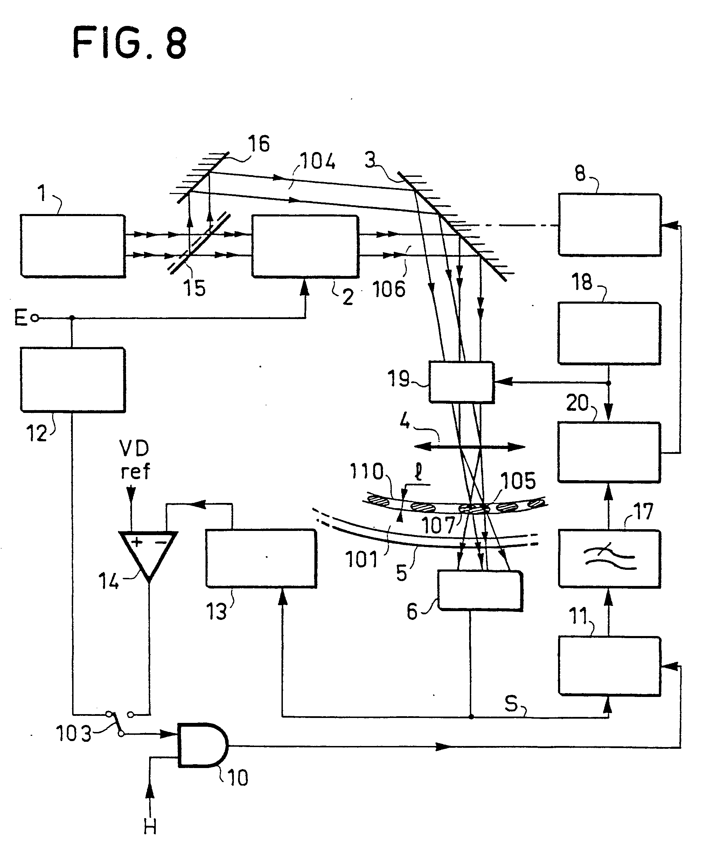

Selon une variante de l'invention, la figure 8 représente un dispositif dans lequel le suivi de piste met en œuvre une technique de détection basée sur la wobbulation. Dans la description qui suit, seule la boucle de contre-réaction va être explicitée, afin de mieux comprendre comment coopère l'invention avec un dispositif à wobbulation. Un circuit tel que représenté à la figure 8, comporte un oscillateur local 18 qui fournit un signal alternatif à sa sortie qui est appliqué à l'entrée d'un moyen déviateur auxiliaire 19 et à l'une des entrées d'un détecteur synchrone 20. En accord avec le théorème de Shannon, la fréquence de l'oscillateur local 18 est choisie inférieure à la moitié de la fréquence horloge H. Le moyen déviateur auxiliaire 19 est disposé avant l'objectif 4 et, dans le cas représenté à la figure 8, le faisceau de pilotage 104 et le faisceau de transcription 106 le traversent. Ce moyen déviateur auxiliaire 19 peut être, par exemple, une cellule de déviation acousto-optique qui sert à imprimer aux taches lumineuses 105, 107 un déplacement radial à la fréquence de l'oscillateur local 18. Le détecteur synchrone 20 reçoit sur l'une de ses entrées le signal fourni par l'oscillateur local 18, et sur l'autre entrée, le signal issu des moyens photodétecteurs 6 après avoir été échantillonné-mémorisé par les moyens échantillonneur-bloqueurs 11 et lissé par le filtre passe-bas 17. Le moteur 8, agissant sur les moyens de déflexion 3, est commandé par le détecteur synchrone 20, afin de corriger toute erreur d'exploration de la piste.

**Revendications**

1. Dispositif de suivi automatique de piste pour dispositif de lecture et d'écriture optique de données comportant un support d'information, une source de rayonnement optique (1) associée à un objectif (4) pour former dans la surface de référence (101) dudit support au moins une tache destinée à l'exploration d'un élément de piste appartenant à un ensemble d'éléments de piste adjacents ; ledit dispositif de suivi comprenant des moyens d'asservissement (3, 6, 7, 8) assurant le suivi dudit élément de piste par ladite tache, des moyens photodétecteurs (6) recueillant un rayonnement émergeant de la portion de ladite surface de référence éclairée par ladite tache et des moyens échantillonneurs (11) reliant lesdits moyens photodétecteurs auxdits moyens d'asservissement pour effectuer des prélèvements de signal photodétecté au cours d'intervalles de temps correspondant à l'exploration de sites dédiés au suivi de piste, caractérisé en ce que ledit support d'information (5) est prégravé et que ledit dispositif comporte un modulateur optique (2) situé entre ladite source et ledit objectif, permettant d'inscrire optiquement lorsque l'intensité du rayonnement modulé dépasse un seuil d'intensité prédéterminé et en ce que les sites dédiés au suivi de piste sont des sites de prégravure ayant conservé leurs caractéristiques optiques, ces sites étant explorés en mode de lecture par des moyens de détection (13, 14) d'un motif de prégravure ordonnant lesdits prélèvements.

2. Dispositif selon la revendication 1, caractérisé en ce que lesdits moyens échantillonneurs (11) reçoivent sur une première entrée ledit signal photodétecté (S) et sur une seconde entrée un signal ordonnant lesdits prélèvements lesquels sont de même effectués hors du mode de lecture, pendant le mode d'écriture, au cours d'une phase (T₁) au cours de laquelle ladite tache explore un site dédié au suivi de piste.

3. Dispositif selon la revendication 2, caractérisé en ce que le signal ordonnant lesdits prélèvements, pendant l'écriture, agit par le truchement d'un circuit logique à coïncidence (10) ayant une entrée reliée à une horloge externe (H), afin d'assurer au moins un prélèvement d'échantillon dudit signal photodétecté (S) pendant la phase (T₁) au cours de laquelle ladite tache explore un site dédié au suivi de piste.

4. Dispositif selon la revendication 3, caractérisé en ce que plusieurs prélèvements d'échantillons sont effectués à l'intérieur de ladite phase (T₁).

5. Dispositif selon l'une quelconque des revendications 2 à 4, caractérisé en ce que lesdits moyens d'échantillonnage (11) comprennent un circuit échantillonneur-bloqueur conservant la valeur d'un échantillon jusqu'à la saisie de l'échantillon suivant.

6. Dispositif selon l'une quelconque des revendications 1 à 5, caractérisé en ce que lesdits moyens d'échantillonnage (11) agissent sur des moyens de déplacement (3, 8) de ladite tache via des moyens électriques de lissage (17).

7. Dispositif selon l'une quelconque des revendications 1 à 6, caractérisé en ce que lesdits moyens d'échantillonnage (9, 10, 11, 14) sont reliés à une première entrée de moyens de détection synchrone (20) ayant une seconde entrée recevant d'un générateur (18) une forme d'onde périodique et une sortie reliée à l'entrée de commande de moyens de déplacement de ladite tache (3, 8) ; la fréquence de ladite forme d'onde périodique étant au plus égale à la moitié de la fréquence de ladite horloge externe (H).

8. Dispositif selon la revendication 7, caractérisé en ce que ladite forme d'onde périodique est appliquée à ladite entrée de commande.

9. Dispositif selon l'une quelconque des revendications 2 à 5, caractérisé en ce que le repérage d'un site dédié au suivi de piste lors de sa phase d'exploration (T₁) est assuré sur le support d'information par la présence d'un drapeau.

10. Dispositif selon l'une quelconque des revendications 1 à 9, caractérisé en ce que deux faisceaux sont focalisés par un objectif dans ladite surface de référence, afin de produire deux taches lumineuses qui se suivent le long d'un élément de piste ; l'un desdits faisceaux étant un faisceau pilote et l'autre desdits faisceaux étant un faisceau d'écriture destiné à la postgravure desdites données.

11. Dispositif selon l'une quelconque des revendications précédentes, caractérisé en ce que lesdites données sont des données numériques agencées par blocs occupant les sites dédiés à leur postgravure.

12. Dispositif selon l'une quelconque des revendications précédentes, caractérisé en ce que l'alternance des sites structurés et des sites destinés à la postgravure desdites données est régulière.

**Claims**

1. A device for automatically following a track in an optical data reading and writing device, comprising an information carrier, a light radiation source (1) associated to a lens (4) for creating at least one spot on the reference surface (101) of said carrier, said spot being intended to explore a track element belonging to a group of adjacent track elements, said track following device comprising feedback control means (3, 6, 7, 8) allowing said spot to follow said track element, photodetector means (6) receiving a radiation from the portion of said reference surface illuminated by said spot, and sampling means (11) connecting said photodetector means to said feedback control means in order to sample the photodetected signal during time intervals corresponding to the exploration of sites dedicated to the track following, characterized in that said information carrier (5) is preengraved and that said device comprises an optical modulator (2) situated between said source and said lens, and allowing an optical inscription, if the intensity of the modulated radiation exceeds a predetermined intensity threshold, and that the sites dedicated to the track following are pre-engraving sites having conserved their optical characteristics, these sites being explored in the reading mode by means (13, 14) for detecting a pre-engraving pattern commanding said sampling.

2. A device according to claim 1, characterized in that the sampling means (11) receive on a first input said photodetected signal (S) and on a second input a signal commanding said sampling which is also performed outside the reading mode in a writing mode during a phase (T₁) in which said spot explores a site dedicated to the track following.

3. A device according to claim 2, characterized in that the signal commanding said sampling during the writing phase acts by switching a logical coincidence circuit (10). one input of which is connected to an outer clock (H) in order to ensure at least one sample extraction from the photodetected signal (S) during the phase ($T_1$) in which said spot explores a site dedicated to the track following.

4. A device according to claim 3. characterized in that several sample extractions are performed during said phase ($T_1$).

5. A device according to any one of claims 2 to 4. characterized in that said sampling means (11) comprise a sample and hold circuit which stores the value of a sample until the next sample is taken.

6. A device according to any one of claims 1 to 5. characterized in that said sampling means (11) act on means (3, 8) for displacing the spot via electrical smoothing means (17).

7. A device according to any one of claims 1 to 6. characterized in that the sampling means (9, 10, 11, 14) are connected to a first input of synchroneous detection means (20), a second input of which receives from a generator (18) a periodical wave and an output of which is connected to the control input of the means for displacing said spot (3, 8), the frequency of said periodical wave being at most equal to half the frequency of said external clock (H).

8. A device according to claim 7, characterized in that said periodical wave is applied to said control input.

9. A device according to any one of claims 2 to 5. characterized in that the marking of a site dedicated to the track following during the exploration phase ($T_1$) is ensured on the information carrier by the presence of a flag.

10. A device according to any one of claims 1 to 9. characterized in that two bundles are focalised by a lens onto said reference surface in order to produce two light spots which follow each other along a track element, one of these bundles being a pilot bundle and the other being a write bundle conceived to postengrave said data.

11. A device according to any one of the preceding claims. characterized in that said data are digital data arranged in blocks which occupy the sites dedicated to their postengraving.

12. A device according to any one of the preceding claims. characterized in that the alternating sequence of structurated sites and sites conceived to postengrave said data is a regular sequence.

## Patentansprüche

1. Vorrichtung zur automatischen Spurverfolgung für eine optische Datenlese- und schreibvorrichtung, mit einem Informationsträger, einer optischen Strahlungsquelle (1). die einem Objektiv (4) zugeordnet ist, um auf der Bezugsoberfläche (101) des Trägers mindestens einen zur Erfassung eines Spurelements aus einer Gruppe nebeneinanderliegender Spurelemente bestimmten Lichtfleck zu erzeugen, wobei die Verfolgevorrichtung Regelmittel (3. 6. 7. 8) aufweist. die die Verfolgung des Spurelements durch den Lichtfleck sicherstellen. wobei Lichtdetektormittel (6) eine von demjenigen Bereich der Bezugsoberfläche, der von dem Fleck beleuchtet wird, ausgehende Strahlung aufnehmen und Tastmittel (11) die Lichtdetektormittel mit den Regelmitteln verbinden, um Entnahmen des Lichtdetektorsignals in Zeitintervallen vorzunehmen, die der Untersuchung von der Pistenverfolgung gewidmeten Stellen entsprechen, dadurch gekennzeichnet. daß der Informationsträger (5) vorgraviert ist und daß die Vorrichtung einen optischen Modulator (2) aufweist, der zwischen der Quelle und dem Objektiv liegt und eine optische Beschriftung ermöglicht, wenn die Intensität der modulierten Strahlung eine vorgegebene Intensitätsschwelle überschreitet, und daß die der Spurverfolgung gewidmeten Stellen Vorgravurstellen sind, die ihre optischen Kennwerte unverändert erhalten haben und im Lesemodus von Detektormitteln (13, 14) für ein Vorgravurmotiv untersucht werden, das die Signalentnahmen veranlaßt.

2. Vorrichtung nach Anspruch 1, dadurch gekennzeichnet, daß die Abtastmittel (11) an einem ersten Eingang das Ausgangssignal (S) des Lichtdetektors und an einem zweiten Eingang ein Signal zugeführt erhalten, das die Signalentnahmen veranlaßt, die auch außerhalb des Lesemodus während des Schreibmodus in einer Phase ($T_1$) durchgeführt werden, in der der Lichtfleck eine der Spurverfolgung gewidmete Stelle untersucht.

3. Vorrichtung nach Anspruch 2, dadurch gekennzeichnet, daß das die Signalentnahmen veranlassende Signal während des Schreibens durch Umschaltung eines logischen Koinzidenzkreises (10) wirksam wird, der einen an einen äußeren Takt angeschlossenen Eingang besitzt. um während der Phase ($T_1$). in der der Lichtfleck eine der Spurverfolgung gewidmete Stelle untersucht, mindestens eine Tastprobenentnahme des Ausgangssignals (S) des Lichtdetektors zu bewirken.

4. Vorrichtung nach Anspruch 3. dadurch gekennzeichnet, daß mehrere Tastprobenentnahmen innerhalb dieser Phase ($T_1$) erfolgen.

5. Vorrichtung nach einem beliebigen der Ansprüche 2 bis 4. dadurch gekennzeichnet, daß die Tastmittel (11) einen Tast- und Haltekreis enthalten, der den Wert einer Tastprobe bis zur Erfassung der nächsten Tastprobe speichert.

6. Vorrichtung nach einem beliebigen der Ansprüche 1 bis 5. dadurch gekennzeichnet, daß die Tastmittel (11) auf Mittel (3. 8) zur Verschiebung des Lichtflecks über elektrische Glättungsmittel (17) einwirken.

7. Vorrichtung nach einem beliebigen der Ansprüche 1 bis 6. dadurch gekennzeichnet, daß die Tastmittel (9. 10. 11. 14) an einen ersten Eingang von Synchrondetektormitteln (20) angeschlossen sind. deren zweiter Eingang von einem Generator (18) eine periodische Welle empfängt und deren Ausgang an den Steuereingang der Lichtfleck-Verschiebemittel (3. 8) angeschlossen ist, wobei die Frequenz der periodischen Welle höchstens gleich der Hälfte der Frequenz des äußeren Takts (H) ist.

8. Vorrichtung nach Anspruch 7, dadurch gekennzeichnet, daß die periodische Welle an den genannten Steuereingang angelegt wird.

9. Vorrichtung nach einem beliebigen der Ansprüche 2 bis 5, dadurch gekennzeichnet, daß die Erkennung einer der Spurverfolgung gewidmeten Stelle während der Untersuchungsphase (T₁) auf den Informationsträger durch das Vorliegen einer Kennmarke sichergestellt ist.

10. Vorrichtung nach einem beliebigen der Ansprüche 1 bis 9, dadurch gekennzeichnet, daß zwei Lichtbündel von einem Objektiv auf die Bezugsoberfläche fokalisiert sind, so daß zwei Lichtflecken erzeugt werden, die entlang eines Spurelements aufeinanderfolgen, wobei eines dieser Bündel ein Pilotbündel und das andere ein Schreibbündel ist, das zur Nachgravierung der Daten bestimmt ist.

11. Vorrichtung nach einem beliebigen der vorhergehenden Ansprüche, dadurch gekennzeichnet, daß die Daten Digitaldaten sind, die in Blöcken zusammengefaßt sind, welche die ihrer Nachgravierung gewidmeten Stellen besetzen.

12. Vorrichtung nach einem beliebigen der vorhergehenden Ansprüche, dadurch gekennzeichnet, daß der Wechsel zwischen strukturierten Stellen und Stellen, die für die Nachgravierung der Daten bestimmt sind, regelmäßig ist.

# FIG. 1

# FIG. 2

# FIG.3

# FIG.4

(a)

(b)

(c)

FIG.5

# FIG. 6

Vref

FIG. 7

a

b

d c b

# FIG. 8